# EUROPEAN PATENT APPLICATION

(11) **EP 2 384 884 A1**
(43) Date of publication of application: **09.11.2011**
(21) Application number: 10400028.6
(22) Date of filing: 07.05.2010
(51) Int. Cl.: B29C 70/08, B29C 70/44, B29C 70/48, B29C 70/54, B29B 11/16

(54) **A method of fabricating a reinforced composite part and a reinforced composite part obtained with said method**

(71) Applicant: Eurocopter Deutschland GmbH, 86609 Donauwörth (DE)
(72) Inventor: Parlevliet, Patricia, 81667 München (DE); Weimer, Christian, 81543 München (DE); Bätge, Nikolaus, 82041 Deisenhofen (DE)
(74) Representative: GPI & Associés

(57) **Abstract**

The present invention relates to a method of fabricating a composite part comprising at least one reinforcing structure (3) based on dry reinforcing fibre, fabric or textile layers (3a), and at least one impregnation matrix (R,R1,R2), the method consisting in assembling the structure (3), in placing said reinforcing structure (3) in a mold (5,8), in impregnating said reinforcing structure (3) with the impregnation matrix (R,R1,R2) by injection or infusion, and in solidifying said impregnated reinforcing structure (3) by raising it to a determined temperature for a set time, the method being characterized in that it consists in using at least one thermoplastic sheet (4) including additives, placing the thermoplastic sheet (4) on or in between the layers (3a) of the reinforcing structure (3) prior to the solidifying stage, and using as the impregnation matrix (R,R1,R2), a thermoplastic resin system suitable for injection or infusion of the reinforcing structure.

## Description

The present invention relates to the general technical field of fabricating parts comprising fiber-based reinforcement and resin. For example, such parts are obtained by molding a composite material comprising reinforcing fibers, fabrics, or textiles and an impregnation matrix. By way of example, such parts are for use in the aviation industry, aerospace structures, automotive industry or wind-energy industry.

The term "impregnation matrix" should be understood as covering any type of polymer resin or polymer resin mixture presenting low viscosity and that is solidified by being polymerized. Low viscosity is needed such that any kind of infusion or injection process is possible.

The term "fibre" is used below to designate any type of structural fiber such as carbon fibers, glass fibers, aramid fibers, polyethylene (polyolefines), basalt or natural fibers.

Known molding methods are not described in detail herein.

The invention relates more particularly to Liquid Composite Molding (LCM) methods, which include various methods such as Vacuum Assisted Resin Transfer Molding (VARTM), resin transfer molding (RTM), liquid resin infusion (LRI), vacuum assisted process (VAP), or Seemann Composite Resin Infusion Molding Process (SCRIMP) or any other method such as Combined Prepreg Infusion (CPI), Same Qualified Resin Transfert Moulding (SQRTM) or Controlled Atmospheric Pressure Resin Infusion (CAPRI). The invention is also suitable for Prepreg technology.

The most of these methods often share in common at least one step that consists in impregnating at least one layer of dry reinforcing fibres or of a reinforcing structure.

The resin mixture can subsequently cure or polymerise for example, in the presence of heat and pressure if necessary, in a solidifying stage.

In the following the term "infusion" means that for instance a resin is sucked through a reinforcing structure or a preform by applying vacuum and the term "injection" means that a resin is injected with additional pressure in a reinforcing structure or a preform.

Composite parts made using the above-mentioned methods, and in particular parts of large dimensions or of complex structure, may present mechanical properties that are locally inappropriate or insufficient. This gives rise for example to zones of weakness or to zones that present insufficient mechanical properties.

In addition, the bonds between primary parts making up a reinforcing structure often present shear strength and peel strength, that are insufficient. This applies for example when assembling panel elements and stiffening elements as happens in airplane fuselages.

In order to enhance the properties of polymers, nanoparticles have been widely investigated. It was found that only a small quantity of nanoparticles can increase the mechanical properties of a polymer. Properties that can be enhanced with for example carbon nanotubes and silicate nanoclays are lightning strike protection, electrical conductivity, mechanical properties such as stiffness, scratch resistance, wear resistance, increased dimensional stability, toughness etc.

Resin systems suitable for LCM methods, have the disadvantage that they are usually very brittle. Especially the ones qualified for aeronautical applications. One way of modifying the impact resistance (toughness) or damage tolerance of these polymers is by adding tougheners in the shape of thermoplastic particles or other additives, such as microspheres and talcum.

However, when these additives are mixed into the resin system before the impregnation stage, a filtering of the particles occurs during the infusion/injection stage of the polymer to impregnate the reinforcing fibres in the mould. This means that the particles are not evenly distributed throughout the structure and remain for example at the inlet of areas where race-tracking of the resin occurs. This is due to the fact that there are places in the mould where less reinforcement fibres are present and the resin therefore encounters less flow resistance.

In addition, the viscosity of the liquid resin increases significantly, in consequence of which a poorer impregnation of the fibres takes place. An increase of the injection pressure as a compensation, would have detrimental cost effects.

It is also very difficult to disperse the nanoparticles well. They have the tendency to conglomerate and this leads to much less enhancement of the properties of the composite part.

Document EP 1 770 115 describes for example a hot pressing of thermoplastics filled with additives, as a matrix for the impregnation of reinforcing structures. In this manufacturing process, there is a high risk of coagulation of the additives due to the relatively high processing temperatures.

As disclosed in document EP 1 317 501, it is known to use thermoplastic fibres in a reinforcing structure prior to an impregnation with a thermosetting resin. The thermoplastic fibres, have an influence on the properties of the impregnation matrix, encouraging it to diffuse within the fiber layer. The composite parts obtained by this known fabrication method thus present the drawback that they can no longer be melted and reshaped for repair purposes. The mechanical or other properties of such parts cannot be enhanced enough, especially for withstanding to very high loads.

The object of the present invention is consequently to remedy the above-mentioned drawbacks and to propose a novel method of fabricating reinforced composite parts that are optimized in particular in terms of their physical properties.

Another object of the present invention is to propose a novel method of fabrication that is particularly simple and reliable for making a reinforced composite part with a small number of implementation steps.

Another object of the present invention is to propose a novel method of fabrication that is particularly simple and reliable for making reinforced composite parts, including steps of preparing reliable and optimized preforms especially in terms of their physical properties.

The objects given to the invention are achieved with the help of a method of fabricating a composite part presenting a structure of composite material comprising at least one reinforcing structure based on dry reinforcing fibre, fabric or textile layers, and at least one impregnation matrix, the method consisting in assembling the structure, in placing said reinforcing structure in a mold, in impregnating said reinforcing structure with the impregnation matrix by injection or infusion, and in solidifying said impregnated reinforcing structure by raising it to a determined temperature for a set time, the method being characterized in that it consists in:
- using at least one thermoplastic sheet including additives,
- placing the thermoplastic sheet on or in between the layers of the reinforcing structure prior to the solidifying stage,
- and using as the impregnation matrix, a thermoplastic resin system suitable for injection or infusion of the reinforcing structure.

In an implementation in accordance with the invention, the method consists in selecting the material of the thermoplastic resin system among a family of materials comprising polyamides (anionic polyamide-6, PA11), polyesters (cyclics PBT), liquid crystalline polymers, polyketones and polysulfones.

In an implementation in accordance with the invention, the method consists in using a source of heat, at least locally in defined positions or points of the reinforcing structure, to bond together the reinforcing layers and the thermoplastic sheet prior to the injection or infusion operation of the reinforcing structure.

In an implementation in accordance with the invention, the method consists in stitching the thermoplastic sheet on at least one reinforcing layer of the reinforcing structure with a stitching yarn.

In an implementation in accordance with the invention, the method consists in shaping the reinforcing structure in a perform by using heat, whereby the stitching yarn is made of a thermoplastic material, similar to the thermoplastic sheet and with a higher melting temperature than the necessary temperature for shaping the reinforcing structure.

By way of example, the additives comprise carbon nanotubes and/or carbon nanofibres.

By way of example, at least some of the additives are well dispersed in delimited and defined parts of the thermoplastic sheet.

In an implementation in accordance with the invention, the method consists in using a thermoplastic sheet made up of one or more of the following materials, polyimides, polyiamides, polysulfones, polyethersulfides, polyetherimides and any material that solves in carpolactam.

By way of example, the thermoplastic sheet presents thickness lying in the range 0.02 mm to 1 mm, preferably in the range 0.02 mm to 0.4 mm and most preferably in the range 0.02 to 0.05 mm.

In an implementation in accordance with the invention, the method consists, during the solidification stage, in also subjecting the impregnated reinforcing structure to a vacuum or to a pressure higher than atmospheric pressure.

The objects given to the invention are also achieved with the help of a composite reinforced part obtained with the method described above, comprising at least one thermoplastic sheet including additives, at least one reinforcing structure based on reinforcing fibre, fabric or textile layers impregnated with a thermoplastic resin system, whereby the thermoplastic sheet is affixed on or in the reinforcing structure.

In an implementation in accordance with the invention, the composite reinforced part comprises at least one additional thermoplastic sheet including additives, as a bonding interface between different reinforcing structures or preforms

An advantage of the method in accordance with the invention, lies in the fact that the thermoplastic sheet or film does not flow during the processing cycle and so the additives remain at their optimal place. The additives can so be placed where they are needed, for example at the surface for lightning strike protection or scratch resistance or in the center for less curing shrinkage or for decreasing thermal and curing residual strain formation.

Another advantage of the method, in accordance with the invention, lies in the fact that no filtering effect occurs.

Another advantage of the method in accordance with the invention, lies in the fact that the additives remain homogeneously dispersed and localized.

Another advantage of the method in accordance with the invention lies in the fact that the thermoplastic sheet is an additive carrier and also a toughening element of the reinforced structure when it is incorporated in the reinforcing structure.

Another advantage of the method in accordance with the invention, lies in the fact that additives remain in place even after a solving of the thermoplastic sheet in a solidifying stage. The solving temperature is therefore higher than the infusion temperature and lies below or at the curing temperature.

Another advantage of the method in accordance with the invention lies in the fact that the use of the thermoplastic sheet or film complies unexpectedly with the use of a thermoplastic resin system, especially because one of the base components of the infusion resin may act as a solvent of the thermoplastic of which is made the film.

Another advantage of the method in accordance with the invention lies in the fact that the solidifying or curing cycles of the resin system is not altered by the use of a thermoplastic sheet or film.

Another advantage of the method in accordance with the invention lies in the fact that the thermoplastic sheet or film can be incorporated in a perform and melts a little in order to establish an adhesion with the dry reinforcing layers during the shaping of the said preform.

It is also advantageously possible to define zones in a single integral structure that have properties and/or functions that differ, especially in using a thermoplastic sheet. There can be zones of thermoplastic sheet where not the same quantity or not the same additives are diffused. Alternatively, different thermoplastic sheets can be used.

Another advantage of the method in accordance with the invention lies in the improvement to its mechanical properties at the bonds between different reinforcing structures.

Another advantage of the repair method in accordance with the invention lies in its simplicity and in its small number of implementation steps.

The invention and its advantages appear in greater detail from the following description of implementations given by way of non-limiting illustration and with reference to the accompanying figures, in which:
- figures 1 and 2, are diagrams illustrating an implementation of steps of the fabrication method in accordance with the invention for making a composite reinforced part,
- figure 3, is a diagram illustrating a step of assembling the reinforcing structures as used in the fabrication method in accordance with the invention;
- figure 4, is a diagram showing an embodiment of assembled reinforcing structures as used in the fabrication method in accordance with the invention;
- figure 5, is a diagram showing an operation of impregnating assembled reinforcing structures in the fabrication method in accordance with the invention,
- figure 6, is a diagram showing an example of an impregnation mold used for implementing the fabrication method in accordance with the invention,
- figure 7, is a diagram showing another example of an impregnation mold used for implementing the fabrication method in accordance with the invention,
- figures 8a to 8d, a diagram showing an example of forming a perform, in the fabrication method in accordance with the invention,
- and figure 9, is a diagram showing an embodiment of a composite reinforced part obtained by implementing the fabrication method in accordance with the invention.

Elements that are structurally and functionally identical and that appear in different figures are given the same numerical or alphanumerical references in each of them.

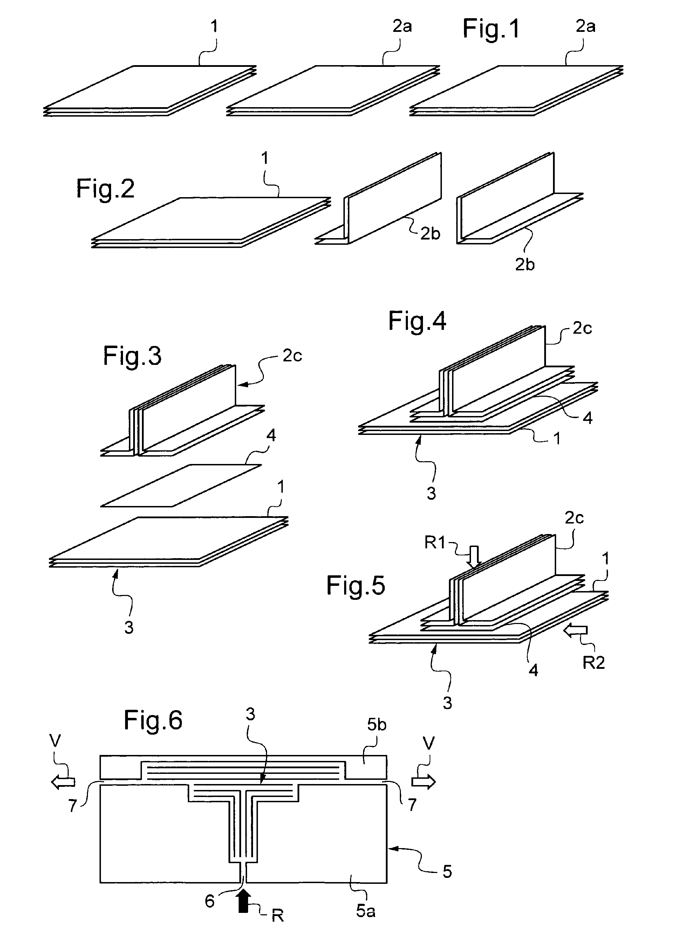

Figures 1 and 2 show examples of making and shaping a primary part 1 and base elements 2a, e.g. constituted by assembling layers (or "plies") of dry reinforcing fibers. The base elements 2a are shaped into intermediate elements 2b or preforms and then assembled to one another, e.g. by adhesive means, so as to constitute another primary part 2c, like a profile member.

Figure 3 shows how an embodiment of a reinforcing structure 3 is assembled. The reinforcing structure 3 comprises a thermoplastic sheet 4 constituting the interface between primary parts 1 and 2c, when said primary parts 1 and 2c are assembled together to constitute the reinforcing structure 3.

The reinforcing structure 3 is shown by way of example in Figure 4. The mechanical bond between the primary parts 1 and 2c is obtained by melting followed by solidification of the thermoplastic sheet 4. The same can apply for assembling the intermediate elements 2b.

Figure 5 is a diagram showing how the reinforcing structure 3 is impregnated with impregnation matrices R1 and R2. In the example shown, the impregnation matrix R1, is injected into or infused over the primary part 2c. The other impregnation matrix R2, is injected into or infused over the primary part 1. The thermoplastic sheet 4 in this example enables the impregnation matrices R1 and R2 to be diffused and confined in the primary parts 2c and 1, respectively.

By way of example, the impregnation matrices R1 and R2 may be identical. Under such circumstances, in addition to mechanically bonding the primary parts 2c and 1 together, the thermoplastic sheet 4 can serve to optimize the flow of the matrix in the primary parts 2c and 1.

Figure 6 shows an embodiment of a closed mold 5 for impregnating the reinforcing structure 3 in a single operation. The closed mold 5 has a base 5a and a cover 5b. The base 5a presents an admission opening 6 for a matrix R, and suction openings 7 connected to a vacuum source V.

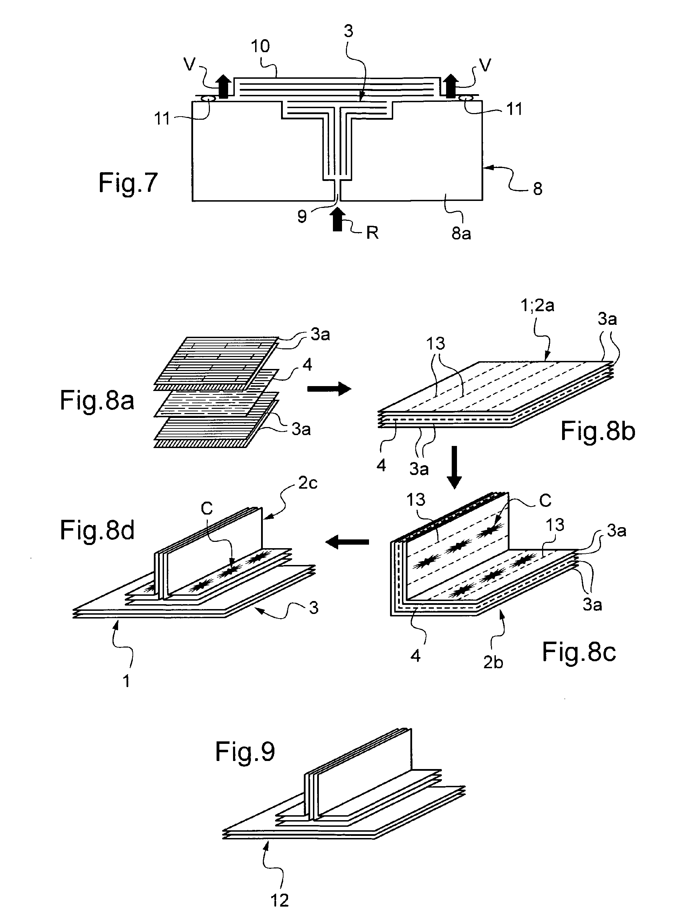

As a variant, Figure 7 shows a matrix of an open mold 8 for impregnating the reinforcing structure 3 in a single operation. The open mold 8 comprises a base 8a provided with an admission opening 9 for the matrix R. The reinforcing structure 3 resting on the base 8a is covered in a vacuum sheet 10 that is itself known. A vacuum source V serves to apply a relative vacuum in the volume defined by the base 8a and the vacuum sheet 10. Sealing between the base 8a and the vacuum sheet 10 is provided by gaskets 11.

Figure 8a and 8b show an example of a reinforcing structure 3. The reinforcing layers 3a and the thermoplastic sheet 4 are joined, for example by stitching to form the primary part 1 and the base elements 2a.

One of the base elements 2a is shaped, in figure 8c, in an intermediate element 2b or preform. The shape of this preform is maintained with the help of heating points C which melt a little the thermoplastic sheet 4. An example is illustrated in figure 8c.

The use of heating points 6 and of an additional thermoplastic sheet 4, permits also the welding of the two primary parts 1, 2c together, as it is shown in figure 8d.

Figure 9 shows an example of a composite part 12 obtained by the fabrication method in accordance with the invention.

The composite reinforced part 12 comprises at least one thermoplastic sheet 4 including additives, at least one reinforcing structure 3 comprising primary parts 1, 2a, 2c based on reinforcing fibre, fabric or textile layers 3a impregnated with the thermoplastic resin system.

The composite reinforced part 12 can comprise also an additional thermoplastic sheet 4, for example including additives, as a bonding interface between different reinforcing structures 3 or preforms such as the primary parts 2b.

The thermoplastic sheet 4 is for example made up of one or more of the following materials, polyimides, polyamides, polysulfones, polyethersulfides, polyetherimides and any material that solves in carpolactam.

The thermoplastic sheet 4 presents a thickness lying in the range 0.02 mm to 1 mm, preferably in the range 0.02 mm to 0.4 mm and most preferably in the range 0.02 to 0.05 mm.

The thermoplastic sheet 4 partially dissolves in the resin system with which the reinforcing structure 3 will be infused later. This could by assisted by heat.

Another application of the thermoplastic sheet 4 is enabling performing by means of partially melting the thermoplastic sheet 4, forming and stabilizing the preform by solidifying the thermoplastic sheet 4 (e.g.: hot forming)..

The additives comprise carbon nanotubes and/or carbon nanofibres. The additives may also comprise nanoclays, flame retardants, electrically conductive particles and particles responsive to induction heating or pigments.

At least some of the additives can be well dispersed in delimited and defined parts of the thermoplastic sheet 4.

The additives of the thermoplastic sheet 4 include, for example, a material that expands under the effect of heat.

Alternatively, or in addition, the materials constituting the thermoplastic sheet 4 include an electrically-conductive material.

Alternatively, or in addition, the materials constituting the thermoplastic sheet 4 include, for example, a material that is non-flammable or flame retardant.

The fabricating method according to the invention is described below more in detail.

The method of fabricating a composite part comprising at least one reinforcing structure 3 based on dry reinforcing fibre, fabric or textile layers, and at least one impregnation matrix R,R1,R2 consists in assembling the structure 3, in placing said reinforcing structure in a mold, in impregnating said reinforcing structure with the impregnation matrix R1,R2,R by injection or infusion, and in solidifying said impregnated reinforcing structure 3 by raising it to a determined temperature for a set time.

The method also consists in using at least one thermoplastic sheet 4 including additives, in placing the said thermoplastic sheet 4 on or in between the layers 3a of the reinforcing structure 3 prior to the solidifying stage and in using as the impregnation matrix R1,R2,R a thermoplastic resin system suitable for injection or infusion of the reinforcing structure 3.

The method also consists in using a source of heat, at least locally in defined positions or points C, to bond together the reinforcing layers 5 and the thermoplastic sheet 4 prior to the injection or infusion operation of the reinforcing structure 3.

Alternatively, the method can consist in stitching the thermoplastic sheet 4 on at least one reinforcing layer 3a of the reinforcing structure 3 with a stitching yarn 13.

The stitching yarn 13 is made for example of a thermoplastic material, similar to the thermoplastic sheet 4 and with a higher melting temperature than the necessary temperature for shaping the reinforcing structure 3. This ensures that the right fibre architecture is maintained during the forming stage.

After the forming stage, the thermoplastic sheet 4 and the stitching yarn 13 at the surface of the reinforcing structure 3, can be used to thermally bond other reinforcing structures 3 or preforms.

In another implementation, the method also consists in subjecting the impregnated reinforcing structure 3, during the solidification step, to a vacuum or to a pressure higher than atmospheric pressure. The solidifying temperature can for instance be set to the room temperature or higher in other cases.

Naturally, the present invention may be subjected to numerous variations as to its implementation. Although several implementations are described above, it will readily be understood that it is not conceivable to identify exhaustively all possible implementations. It is naturally possible to envisage replacing any of the means described or any of the steps described by equivalent means or equivalent steps without going beyond the scope of the present invention.

## Claims

1. A method of fabricating a reinforced composite part comprising at least one reinforcing structure (3) based on dry reinforcing fibre, fabric or textile layers (3a), and at least one impregnation matrix (R,R1,R2), the method consisting in assembling the reinforcing structure (3), in placing said reinforcing structure (3) in a mold (5,8), in impregnating said reinforcing structure with the impregnation matrix (R,R1,R2) by injection or infusion, and in solidifying said impregnated reinforcing structure (3) by raising it to a determined temperature for a set time, the method being **characterized in that** it consists in:
- using at least one thermoplastic sheet (4) including additives,
- placing the thermoplastic sheet (4) on or in between the layers (3a) of the reinforcing structure (3) prior to the solidifying stage,
- and using as the impregnation matrix (R,R1,R2) a thermoplastic resin system suitable for injection or infusion of the reinforcing structure (3).

2. Method according to claim 1,
**characterized in that** it consists in selecting the material of the thermoplastic resin system among a family of materials comprising polyamides (anionic polyamide-6, PA11), polyesters (cyclics PBT), liquid crystalline polymers, polyketones and polysulfones.

3. Method according to claim 1 or 2,
**characterized in that** it consists in using a source of heat, at least locally in defined positions or points (C) of the reinforcing structure (3), to bond together the reinforcing layers (3a) and the thermoplastic sheet (4) prior to the injection or infusion operation of the reinforcing structure (3).

4. Method according to claim 1 or 2,
**characterized in that** it consists in stitching the thermoplastic sheet (4) on at least one reinforcing layer (3a) of the reinforcing structure (3) with a stitching yarn (13).

5. Method according to claim 4,
**characterized in that** it consists in shaping the reinforcing structure (3) in a preform by using heat, whereby the stitching yarn (13) is made of a thermoplastic material, similar to the thermoplastic sheet (4) and with a higher melting temperature than the necessary temperature for shaping the reinforcing structure (3).

6. Method according to any of claims 1 to 5,
**characterized in that** the additives can comprise carbon nanotubes , carbon nanofibres, silicate nanoclays, nano whiskers, etc.

7. Method according to any of claims 1 to 6,
**characterized in that** at least some of the additives are well dispersed in delimited and defined parts of the thermoplastic sheet (4).

8. Method according to any one of claims 1 to 7,
**characterized in that** it consists in using a thermoplastic sheet (4) made up of one or more of the following materials, polyimides, polyamides, polysulfones, polyethersulfones, polyetherimides, polyhydroxyethers and any material that solves in carpolactam or other components of the infusion resins.

9. Method according to any one of claims 1 to claim 8, **characterized in that** the thermoplastic sheet (4) presents thickness lying in the range 0.02 mm to 1 mm, preferably in the range 0.02 mm to 0.4 mm and most preferably in the range 0.02 to 0.125 mm.

10. Method according to any one of claims 1 to 9,
**characterized in that** it consists, during the impregnation and solidification stage, in also subjecting the impregnated reinforcing structure (3) to a vacuum (V) or to a pressure higher than atmospheric pressure.

11. Composite reinforced part (12) obtained with the method according to any of claims 1 to 10, comprising at least one thermoplastic sheet (4) including additives, at least one reinforcing structure (3) based on reinforcing fibre, fabric or textile layers (3a) impregnated with a thermoplastic resin system, whereby the thermoplastic sheet (4) is affixed on or in the reinforcing structure (3).

12. Composite reinforced part (12) according to claim 11,
**characterized in that** it comprises at least one additional thermoplastic sheet (4) including additives, as a bonding interface between different reinforcing structures (3) or performs.
